# EUROPEAN PATENT APPLICATION

(11) **EP 4 586 383 A1**
(43) Date of publication of application: **16.07.2025**
(21) Application number: 22959155.7
(22) Date of filing: 22.09.2022
(51) Int. Cl.: H01M 50/30, H01M 50/342, H01M 50/244

(54) **BATTERY CELL, BATTERY, AND ELECTRIC DEVICE**

(71) Applicant: CONTEMPORARY AMPEREX TECHNOLOGY (HONG KONG) LIMITED, Central (HK)
(72) Inventor: WU, Kai, Ningde, Fujian 352100 (CN); CHEN, Xiaobo, Ningde, Fujian 352100 (CN); LI, Yao, Ningde, Fujian 352100 (CN); GU, Mingguang, Ningde, Fujian 352100 (CN); KE, Jianhuang, Ningde, Fujian 352100 (CN)
(74) Representative: Gong, Jinping
(86) International application number: PCT/CN2022/120618
(87) International publication number: WO 2024/060147

(57) **Abstract**

Embodiments of the present application provide a battery cell, a battery, and an electrical apparatus. The battery cell comprises: a shell comprising a first wall; and a pressure relief mechanism provided on the first wall; wherein the burst pressure of the pressure relief mechanism is P1, and the burst pressure of the shell is P2, satisfying P2≥1.7 MPa and P2>P1. In technical solutions of the present application, the burst pressure P2 of the shell is designed to be 1.7 MPa or above, which can greatly improve compressive strength of the shell. Such design not only can effectively improve the stability of directional pressure relief of the battery cell from the pressure relief mechanism, but also can reduce risks that the shell bursts as the pressure relief mechanism releases pressure, thereby effectively improving structural stability and safety of the battery cell.

## Description

### TECHNICAL FIELD

The present application relates to the technical field of batteries, and particularly relates to a battery cell, a battery, and an electrical apparatus.

### BACKGROUND

As energy saving and emission reduction become the key to sustainable development of automobile industry, electric vehicles have become an important part of the sustainable development of the automobile industry due to their advantages of energy saving and environmental protection. For electric vehicles and energy storage systems, battery technology is an important factor related to their development.

In the development of the battery technology, how to improve structural stability and safety of batteries is a technical problem to be urgently solved of the battery technology.

### SUMMARY OF THE INVENTION

The present application provides a battery cell, a battery, and an electrical apparatus. The battery cell can effectively improve structural stability and safety thereof.

In a first aspect, the present application provides a battery cell, comprising: a shell comprising a first wall; and a pressure relief mechanism provided on the first wall; wherein the burst pressure of the pressure relief mechanism is P1, and the burst pressure of the shell is P2, satisfying P2≥1.7 MPa and P2>P1.

In technical solutions of the present application, the pressure relief mechanism is provided on the shell of the battery cell. In case of occurrence of thermal runaway of the battery cell, energy and runaway emissions released from thermal runaway can be discharged through the pressure relief mechanism. However, as energy density of the battery system increases, runaway power increases significantly in case of occurrence of thermal runaway of the battery cell, and the energy and runaway emissions released from the thermal runaway will be released in a very short time. If the shell of the battery cell has insufficient air pressure resistance, the runaway emissions will be discharged from a non-pressure relief mechanism region, thereby resulting in problems, such as serious damage to the shell and irregular discharge of the emissions, and affecting structural stability and use safety of the battery. Moreover, pressure relief of the battery cell from the non-pressure relief mechanism region tends to cause level protection failure of the battery system, thus resulting in severer safety hazard. In the technical solutions of the present application, the burst pressure P2 of the shell of the battery cell is higher than the burst pressure P1 of the pressure relief mechanism. Moreover, the burst pressure P2 of the shell is designed to be 1.7 MPa or above, which can greatly improve compressive strength of the shell. Such design not only can effectively improve the stability of directional pressure relief of the battery cell from the pressure relief mechanism, but also can reduce risks that the shell bursts as the pressure relief mechanism releases pressure, thereby effectively improving structural stability and safety of the battery cell.

According to some embodiments of the present application, P2/P1≥1.35.

In the above technical solutions, a ratio of the burst pressure P2 of the shell to the burst pressure P1 of the pressure relief mechanism is higher than or equal to 1.35. If the ratio of P2 to P1 is too low (that is, P1 tends towards P2), after the pressure relief mechanism acts in case of thermal runaway of the battery cell, the shell tends to burst immediately following the pressure relief mechanism, thereby resulting in the battery failure. The ratio of P2 to P1 is designed to be 1.35 or above, so that there is a certain safety margin between pressure of the pressure relief mechanism and pressure resistance value of the shell, thereby improving stability of the pressure relief mechanism bursting prior to the shell, further reducing risks of bursting failure of the shell following the pressure relief mechanism, and effectively improving the structural stability and safety of the battery cell.

According to some embodiments of the present application, P2-P1≥0.4 MPa.

In the above technical solutions, a difference value between the burst pressure P2 of the shell and the burst pressure P1 of the pressure relief mechanism is larger than or equal to 0.4 MPa. If the difference value between P2 and P1 is too small (that is, P1 tends towards P2), after the pressure relief mechanism acts in case of thermal runaway of the battery cell, the shell tends to burst immediately following the pressure relief mechanism, thereby resulting in the battery failure. The difference value between P2 and P1 is designed to be 0.4 MPa or above, thereby further ensuring the safety margin between the pressure of the pressure relief mechanism and the pressure resistance value of the shell, improving the stability of the pressure relief mechanism bursting prior to the shell, further reducing the risks of bursting failure of the shell following the pressure relief mechanism, and effectively improving the structural stability and safety of the battery cell.

According to some embodiments of the present application, 0.5 MPa≤P1≤1.3 MPa.

In the above technical solutions, the burst pressure P1 of the pressure relief mechanism is designed to be between 0.5 MPa and 1.3 MPa. If P1 is designed to be too low, it tends to cause the pressure relief mechanism of the battery cell to act prematurely in normal use, thus affecting the service life of the battery cell; and if P1 is designed to be too high, the shell will be required to have a too high compressive strength, thus failing to satisfy the pressure relief requirements of the battery cell. P1 is designed to be between 0.5 MPa and 1.3 Mpa, which can effectively satisfy the pressure relief requirements of the battery cell.

According to some embodiments of the present application, the shell comprises a case and an end cover, the case has an opening, and the end cover closes the opening.

In the above technical solutions, the shell comprises the case and the end cover, and the split structure design of the shell facilitates assembly of the battery cell. The burst pressure value of the non-pressure relief mechanism region of the shell (including the end cover itself, the case itself, and a connection between the case and the end cover) is designed to be above 1.7 MPa, which can effectively ensure the connection stability at the connection between the case and the end cover and the overall pressure resistance stability of the shell in case of occurrence of thermal runaway of the battery cell.

According to some embodiments of the present application, the end cover is a rectangular plate, and has a width of W, satisfying W≤40 mm.

In the above technical solutions, the larger the width of the end cover is, the poorer the deformation resistance of the end cover is when the end cover is subjected to a force due to occurrence of thermal runaway of the battery cell, and the easier the end cover deforms because of being subjected to the force. The deformation of the end cover can directly affect the connection stability of the end cover and the case, thereby reducing the compressive strength at the connection between the end cover and the case. The end cover is designed to have a width of 40 mm or smaller, which can effectively ensure the deformation resistance of the end cover, thereby effectively improving the compressive strength at the connection between the case and the end cover.

According to some embodiments of the present application, the end cover is a rectangular plate, and has a length of L, satisfying L≤1,200 mm.

In the above technical solutions, the larger the length of the end cover is, the poorer the deformation resistance of the end cover is when the end cover is subjected to a force due to occurrence of thermal runaway of the battery cell, and the easier the end cover deforms because of being subjected to the force. The deformation of the end cover can directly affect the connection stability of the end cover and the case, thereby reducing the compressive strength at the connection between the end cover and the case. The end cover is designed to have a length of 1,200 mm or smaller, which can effectively ensure the deformation resistance of the end cover, thereby effectively improving the compressive strength at the connection between the case and the end cover.

According to some embodiments of the present application, the end cover has a thickness of H1, satisfying 1 mm≤H1≤5 mm.

In the above technical solutions, a smallest thickness of the end cover is larger than or equal to 1 mm, which can effectively improve the deformation resistance of the end cover itself, thereby effectively improving the compressive strength at the connection between the end cover and the case. A largest thickness of the end cover is smaller than or equal to 5 mm, which not only can ensure the deformation resistance of the end cover itself, but also can reduce the space occupancy of the end cover, and is beneficial to improving the energy density of the battery cell and reducing the overall weight of the battery cell.

According to some embodiments of the present application, the end cover is a thickest wall of the shell.

In the above technical solutions, the end cover is the thickest wall of the shell. During the battery cell assembly, the end cover usually needs to be connected to the case by, e.g., welding, crimping, or winded sealing. Moreover, the end cover is usually installed with a component such as a terminal post, and increase of the thickness of the end cover can effectively ensure the structural strength of the end cover, thereby reducing the risks of deformation of the end cover because of being subjected to the force.

According to some embodiments of the present application, the case has a wall thickness of H2, satisfying 0.2 mm<H2≤3 mm.

In the above technical solutions, a smallest thickness of each wall potion of the case is larger than 0.2 mm, which can effectively improve the deformation resistance of the case, thereby effectively improving the compressive strength at the connection between the end cover and the case and the overall compressive strength of the case. The thickness of the case is smaller than or equal to 3 mm, which not only can ensure the deformation resistance of the case, but also can reduce the space occupancy of the case, and is beneficial to improving the energy density of the battery cell and reducing the overall weight of the battery cell.

According to some embodiments of the present application, the first wall is the end cover.

In the above technical solutions, the pressure relief mechanism may be provided on the end cover, to facilitate production and assembly of the battery cell. In case of thermal runaway of the battery cell, gases in the shell flow toward the pressure relief mechanism, and the end cover and the connection between the end cover and the case bear high pressure. The shell is designed to have an overall burst pressure value of 1.7 MPa or above, which can effectively ensure the compressive strength at the connection between the end cover and the case, thereby effectively improving the structural stability and safety of the shell.

According to some embodiments of the present application, the end cover is welded to the case, and an effective fusion depth at the welding point between the end cover and the case is D, satisfying D≥200 µm.

In the above technical solutions, the welding of the end cover and the shell can effectively ensure the connection stability of the end cover and the shell, thereby effectively improving the compressive strength at the connection between the end cover and the case; and the effective fusion depth of the end cover larger than or equal to 200 µm can further improve the compressive strength at the connection between the end cover and the case, thereby improving the compressive strength of the shell.

According to some embodiments of the present application, D≤2,000 µm.

In the above technical solutions, the effective fusion depth at the welding point between the end cover and the case is designed to be below 2000 µm, which can avoid the problem of increasing the thickness of the end cover due to requirements for a too large fusion depth, thereby preventing the end cover from being too thick, which impacts the energy density of the battery cell.

According to some embodiments of the present application, the battery cell has a volumetric energy density of T1, satisfying T1≥600 Wh/L.

In the above technical solutions, the burst pressure P2 of the shell is designed to be higher than or equal to 1.7 MPa, and can be applied to a high energy density battery cell with a volumetric energy density of higher than or equal to 600 Wh/L. The shell with the burst pressure P2 of higher than or equal to 1.7 MPa can effectively reduce the risks that high-temperature and high-pressure gases break through the non-pressure relief mechanism region of the shell due to a large amount of energy released in case of thermal runaway of the high energy density battery cell.

According to some embodiments of the present application, T1≤1,200 Wh/L.

In the above technical solutions, the shell with the burst pressure of higher than or equal to 1.7 MPa is applied to a battery cell with a volumetric energy density of lower than or equal to 1,200 Wh/L, thereby further effectively improving the structural stability of the battery cell.

According to some embodiments of the present application, the battery has a gravimetric energy density of T2, satisfying T2≥220 Wh/Kg.

In the above technical solutions, the burst pressure P2 of the shell is designed to be higher than or equal to 1.7 MPa, and can be applied to a high energy density battery cell with a gravimetric energy density of higher than or equal to 220 Wh/Kg. The shell with the burst pressure P2 of higher than or equal to 1.7 MPa can effectively reduce the risks that high-temperature and high-pressure gases break through the non-pressure relief mechanism region of the shell due to a large amount of energy released in case of thermal runaway of the high energy density battery cell.

According to some embodiments of the present application, T2≤500 Wh/Kg.

In the above technical solutions, the shell with the burst pressure of higher than or equal to 1.7 MPa is applied to a battery cell with a volumetric energy density of lower than or equal to 500 Wh/L, thereby further effectively improving the structural stability of the battery cell.

According to some embodiments of the present application, the shell is a metal member.

In the above technical solutions, the shell is a metal member. Compared with a shell made of plastic or other materials, the shell made of a metal material has strong structural rigidity, outstanding deformation resistance, and good high temperature resistance, and can further improve the structural stability of the battery cell.

In a second aspect, the present application provides a battery, comprising a box body and the battery cell according to any one of the above solutions, wherein the battery cell is accommodated in the box body.

Since the battery cell provided in the first aspect of the present application has high structural stability and safety, the battery provided in the second aspect of the present application also has high structural stability and safety.

In a third aspect, the present application provides an electrical apparatus, comprising the battery cell according to any one of the above solutions, wherein the battery cell is configured to provide electrical energy.

### DESCRIPTION OF DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is an exploded perspective view of a battery cell provided in some other embodiments of the present application;
FIG. 5 is a schematic structural diagram of an end cover provided in some embodiments of the present application;
FIG. 6 is a schematic structural diagram of a case provided in some embodiments of the present application;
FIG. 7 is a partial enlarged view of a portion A shown in FIG. 6; and
FIG. 8 is a partial sectional view of weld between an end cover and a case.

In the drawings, the figures are not drawn to the actual scale.

Description of reference numerals: 1000-vehicle; 100-battery; 10-battery cell; 11-shell; 111-case; 112-end cover; 12-pressure relief mechanism; 13-electrode assembly; 14-terminal post; 20-box body; 21-first portion; 22-second portion; 200-controller; and 300-motor.

X-first direction; Y-second direction; Z-third direction.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the embodiments of the present application rather than all the embodiments. The assembly of the embodiments of the present application generally described and illustrated in the drawings herein can be arranged and designed in a variety of different configurations.

Accordingly, the following detailed description of the embodiments of the present application provided in the accompanying drawings is not intended to limit the scope of the present application for which protection is claimed, but merely to indicate selected embodiments of the present application. Based on the embodiments in the present application, all other embodiments obtained by those of ordinary skill in the art without creative effort fall within the protection scope of the present application.

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the description of the embodiments of the present application, the term "plurality of" means more than two (including two).

In the description of the embodiments of the present application, the directions or positional relationships indicated by the technical terms, such as "center," "longitudinal," "transverse," "length," "width," "thickness," "above," "below," "front," "back," "left," "right," "vertical," "horizontal," "top," "bottom," "inner," "outer," "clockwise," "counterclockwise," "axial," "radial," and "circumferential," are based on the directions or positional relationships shown in the drawings, are only provided to facilitate describing the embodiments of the present application and simplifying the description, rather than indicating or implying that the apparatus or element referred to must have a particular direction, or be configured and operated in a particular direction, and therefore cannot be construed as limiting the embodiments of the present application.

In the description of the embodiments of the present application, unless otherwise explicitly specified and defined, the technical terms, such as "setting," "mounting," "joining," "connecting," and "fixing," should be understood in a broad sense, for example, they may be fixed connection, detachable connection, or integration; or they may be mechanical connection, electrical connection, or signal connection; or they may be direct connection, indirect connection through an intermediate medium, or internal connection of two elements, or interaction relationship between two elements. For those of ordinary skills in the art, the specific meanings of the above terms in the embodiments of the present application can be understood based on specific situations.

In the embodiments of the present application, same reference numerals denote same components, and for the sake of brevity, detailed descriptions of same components are omitted in different embodiments. It should be understood that the dimensions such as the thickness, length, and width of various components in the embodiments of the present application shown in the drawings, as well as the dimensions such as the overall thickness, length, and width of the integrated apparatus are illustrative only and shall not constitute any limitation to the present application.

In the present application, the battery cell may comprise, e.g., a lithium-ion secondary battery, a lithium-ion primary battery, a lithium-sulfur battery, or a sodium/lithium-ion battery, a sodium-ion battery, or a magnesium-ion battery, which is not limited in the embodiments of the present application. The battery cell presents a cylinder shape.

The battery mentioned in the embodiments of the present application refers to a single physical module comprising a plurality of battery cells to provide higher voltage and capacity. For example, the battery mentioned in the present application may be, e.g., a battery module, a battery pack, or an energy storage apparatus (the energy storage apparatus may be, e.g., a household energy storage system, an electrical cabinet, or an energy storage container). The plurality of battery cells may directly form a battery through series connection, parallel connection, or parallel-series connection. The parallel-series connection means that there is both series connection and parallel connection among the plurality of battery cells. The plurality of battery cells may first form battery cell packs through series connection, parallel connection, or parallel-series connection. Then, a plurality of battery cell packs may form a battery through series connection, parallel connection, or parallel-series connection. The battery may comprise a box body configured to encapsulate one or more battery cells. The box body can prevent liquid or other foreign matters from affecting charging or discharging of the battery cell.

The battery cell comprises a shell, an electrode assembly, and an electrolyte solution. The electrode assembly and the electrolyte solution are arranged in the shell of the battery, and the shell provides an accommodating space for the electrode assembly and the electrolyte solution.

The battery cell further comprises a pressure relief mechanism. The pressure relief mechanism is an element or component that releases internal pressure or temperature of the battery cell. The pressure relief mechanism may take the form of, e.g., an explosion-proof valve, an air valve, a pressure relief valve, a safety valve, or a score arranged on the shell.

Improving the structural stability and safety of batteries is an important direction for current development of the battery industry. The inventors have noticed that in case of occurrence of thermal runaway of the battery cell, the structure and components of the battery tend to suffer from large-area damage, which extremely easily causes safety accidents.

The inventors found after analysis of the reasons thereof that as the energy density of the battery system increases, runaway energy of the battery cell increases significantly in case of occurrence of thermal runaway, and the energy and runaway emissions released from thermal runaway will be released in a very short time. The runaway emissions tend to cause the shell to be damaged, e.g., at a position with a smaller thickness of the shell and at a connection of walls of the shell with a weak strength. The runaway emissions will be discharged from the non-pressure relief mechanism region. The main reasons for shell damage include: (1) in case of occurrence of thermal runaway, high-pressure runaway emissions tend to break through the shell, thus resulting in the shell damage; and (2) after occurrence of thermal runaway, melt fracture of the shell tends to be caused by high-temperature runaway emissions. The shell damage tends to cause the battery failure and safety hazards: (1) electrode assembly and other components in the shell tend to fly out irregularly from the fracture of the shell, thus resulting in the battery system failure; and (2) the damage to the shell structure can cause position change of a component such as a busbar component of the battery system, thereby resulting in a short circuit of a high-voltage electrical connection. Moreover, some runaway emissions will be sprayed directly to some vulnerable parts of the battery, thus resulting in the battery system failure and seriously affecting the structural stability and use safety of the battery.

Based on the above reasons, in order to solve the problem that in case of thermal runaway of the battery cell, the non-pressure relief mechanism region of the shell tends to be broken through by high-pressure runaway emissions, thus resulting in the shell damage, and then affecting the structural stability and safety of the battery. The inventors of the present application have designed a battery cell through in-depth research and experiments. The battery cell comprises a shell and a pressure relief mechanism provided on the shell. the burst pressure of the pressure relief mechanism is P1, and the burst pressure of the shell is P2, wherein P2≥1.7 MPa and P2> P1.

In technical solutions of the present application, the burst pressure P2 of the shell is designed to be 1.7 MPa or above, which can greatly improve compressive strength of the shell. Such design not only can effectively improve the stability of directional pressure relief of the battery cell from the pressure relief mechanism, but also can reduce risks that the shell bursts as the pressure relief mechanism releases pressure, thereby effectively improving structural stability and safety of the battery cell.

The battery disclosed in the embodiments of the present application may be used in, but not limited to, an electrical device, such as a vehicle, a ship, a power grid, or an aircraft, and the battery disclosed in the present application can be used to form a power supply system of the electrical device.

An embodiment of the present application provides an electrical apparatus using a battery as a power source. The electrical apparatus may be, but is not limited to, a mobile phone, a tablet, a laptop, an electric toy, an electric tool, a battery cart, an electric vehicle, a ship, a spacecraft, and the like. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

The battery described in the embodiments of the present application is not only applicable to the above-described electrical apparatus, but also may be applicable to all electrical apparatuses using batteries. However, for the sake of simplicity of description, the following embodiment is illustrated when an electrical apparatus in an embodiment of the present application is, for example, a vehicle.

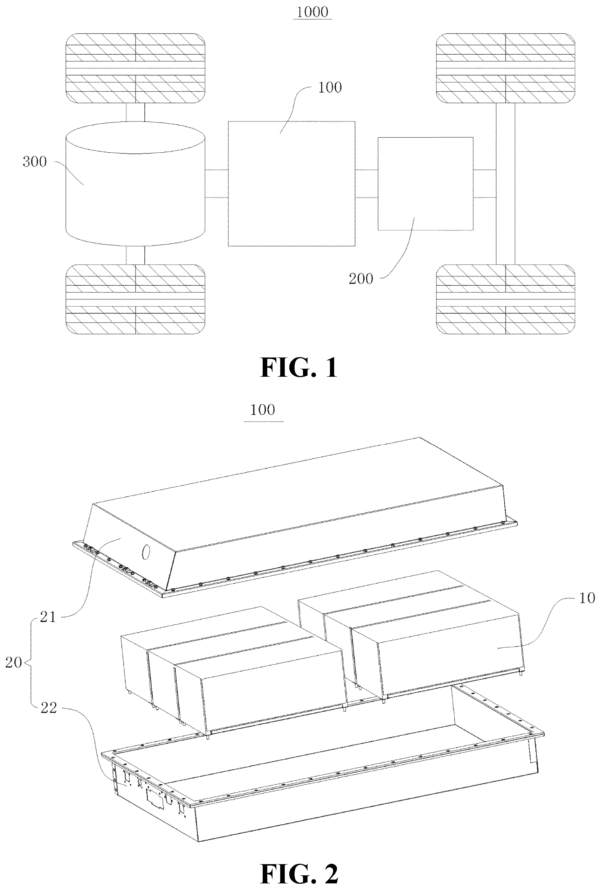

Referring to FIG. 1, FIG. 1 is a schematic structural diagram of a vehicle 1000 provided in some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, serve to satisfy operating power demand when the vehicle 1000 is starting, navigating, and running.

In some other embodiments, the battery 100 not only can serve as an operating power source of the vehicle 1000, but also can serve as a driving power source of the vehicle 1000, to provide a driving power for the vehicle 1000 in place of or partially in place of fuel or natural gas.

As shown in FIG. 2, FIG. 2 shows an exploded view of a battery 100 provided in some embodiments of the present application. The battery 100 comprises a plurality of battery cells 10 and a box body 20. The plurality of battery cells 10 are arranged in the box body 20. The box body 20 comprises a first part 21 and a second part 22. The first part 21 and the second part 22 cover each other to form an accommodating cavity, and a plurality of battery cells 10 are placed in a battery cavity. Shapes of the first part 21 and the second part 22 may be determined based on the shape of a combination of a plurality of battery modules, and the first part 21 and the second part 22 may each have an opening. For example, the first part 21 and the second part 22 may each be a hollow cuboid and each has only one open surface. An opening of the first part 21 is arranged opposite to an opening of the second part 22, and the first part 21 and the second part 22 are snap fit with each other to form a box body 20 with a closed accommodating cavity; or the second part 22 may be a hollow cuboid with only one open surface, the first part 21 is plate-shaped, the first part 21 is snap fit on the open surface of the second part 22 to form a box body 20 with a closed cavity. The plurality of battery cells 10 are combined through parallel connection, or series connection, or parallel-series connection, and then placed in the box body 20 formed after the first part 21 and the second part 22 are snap fit.

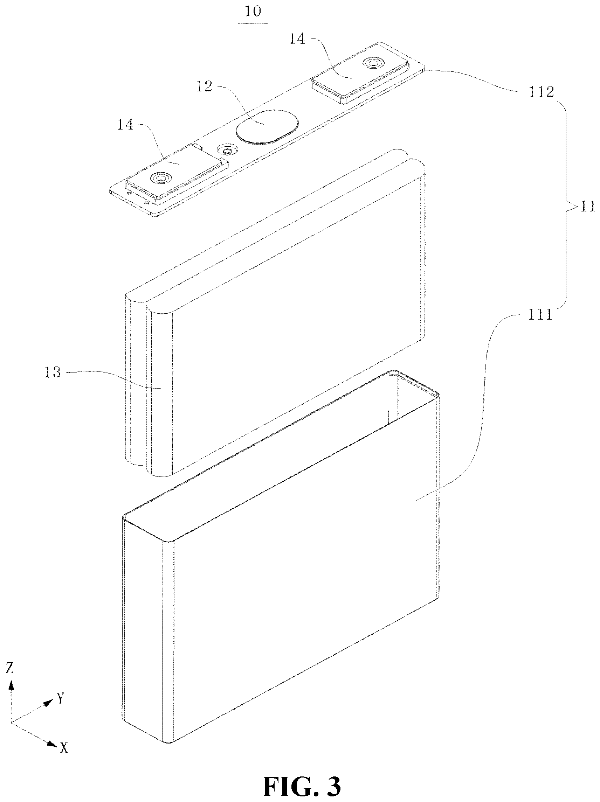

According to some embodiments of the present application, referring to FIG. 3, FIG. 3 is an exploded view of a battery cell 10 provided in some embodiments of the present application. Some embodiments of the present application provide a battery cell 10. The battery cell 10 comprises a shell 11 and a pressure relief mechanism 12, the shell 11 comprises a first wall, and the pressure relief mechanism 12 is provided on the first wall. The burst pressure of the pressure relief mechanism 12 is P1, and the burst pressure of the shell 11 is P2, satisfying P2≥1.7 MPa and P2>P1.

The shell 11 is configured to accommodate an electrode assembly 13. The shell 11 may be in various shapes, such as a cylinder or a cuboid. The material of the shell 11 may be, e.g., an aluminum shell, a steel shell, or a magnesium alloy shell. The pressure relief mechanism 12 is provided on the first wall of the shell 11, and the first wall may be any one wall portion of the shell 11.

As an example, as shown in FIG. 3, the shell 11 may be a hexahedral structure. The shell 11 may comprise a second wall adjacent to the first wall. The second wall is a wall with a largest area of the shell 11. Moreover, the area of the first wall may be smaller than the area of the second wall. That is to say, the pressure relief mechanism 12 may be provided on a wall portion with a small area of the shell 11.

As mentioned above, the pressure relief mechanism 12 is an element or component that releases internal pressure or temperature of the battery cell 10. The pressure relief mechanism 12 may take the form of, e.g., an explosion-proof valve, an air valve, a pressure relief valve, a safety valve, or a score arranged on the shell 11. Taking the pressure relief mechanism 12 with a weak portion as an example, when the internal pressure of the battery cell 10 reaches a threshold, the weak portion provided in the pressure relief mechanism 12 is destroyed, thereby forming an opening or a channel for the internal pressure or temperature of the battery cell 10 to be released, to release the internal pressure of the battery cell 10.

The burst pressure P1 of the pressure relief mechanism 12 refers to a maximum internal pressure value of the shell 11 that is borne when the weak portion of the pressure relief mechanism 12 bursts.

The burst pressure P2 of the shell 11 refers to a maximum internal pressure value of the shell 11 that is borne when the non-pressure relief mechanism 12 region of the shell 11 bursts.

It is understandable that P2 may be any value larger than or equal to 1.7 MPa, such as 1.7 MPa, 1.8 MPa, 1.9 MPa, 2.0 MPa, 2.5 MPa, or 3MPa.

P1 and P2 of the battery cell 10 may be obtained using the following test methods:
(1) the battery cell 10 is restrained using a structure, such as a clamp, so that its stress state is as equivalent as possible to the state of the battery cell 10 in the battery system;
(2) an opening is formed using a tool such as a drill on a surface of the shell 11 of the battery cell 10 (when the shell 11 comprises a case 111 and an end cover 112, the opening may be made on the end cover 112), an air pipe is inserted into the battery cell 10 through the opening, and the air pipe and the shell 11 are sealed with a structural adhesive or other sealing materials, to ensure that the air pipe and the shell 11 are well sealed without occurrence of air leakage;
(3) the shell 11 is pressurized through the air pipe at a pressurization speed controlled by adjusting a flow valve, so that a gas is slowly filled in the shell 11 until the shell 11 or the weak portion of the pressure relief mechanism 12 is destroyed, the pressure value in this case is recorded, the pressure value is the burst pressure value P2 of the shell 11 if the blasting position is the non-pressure relief mechanism region of the shell 11, and the pressure value is the burst pressure value P1 of the pressure relief mechanism 12 if the weak portion of the pressure relief mechanism 12 bursts;
(4) if the first burst region is the weak portion of the pressure relief mechanism 12, the pressure relief mechanism 12 is resealed or blocked using a material such as a metal sheet or a structural adhesive (for example, welded to the shell 11 using the metal sheet that completely covers the pressure relief mechanism 12 and blocks the pressure relief mechanism 12); and
(5) the shell 11 continues to be pressurized through the air pipe at a pressurization speed controlled by adjusting the flow valve, so that the gas continues to be filled in the shell 11 until the shell 11 bursts, and the pressure value in this case is recorded, which is the burst pressure value P2 of the shell 11.

In order to test the influence of P2 on the structural stability of the battery cell 10 in case of occurrence of thermal runaway, the following test is carried out:
Test conditions: a plurality of battery cells 10 installed with the pressure relief mechanisms 12 with P1 of 1.1 MPa are taken, and burst pressure values P2 of shells 11 of the plurality of battery cells 10 range from 1.1 to 2.3 with an equal difference. The result is as shown in the table below.

**Table 1 Test result of influence of P2 on structural stability of battery cell 10 in case of occurrence of thermal runaway**

| P1 (MPa) | P2 (MPa) | Only the weak portion of the pressure relief mechanism bursts in case of occurrence of thermal runaway |
|---|---|---|
| 1.1 | 1.1 | No |
| 1.1 | 1.2 | No |
| 1.1 | 1.3 | No |
| 1.1 | 1.4 | No |
| 1.1 | 1.5 | No |
| 1.1 | 1.6 | No |
| 1.1 | 1.7 | Yes |
| 1.1 | 1.8 | Yes |
| 1.1 | 1.9 | Yes |
| 1.1 | 2.0 | Yes |

As can be seen from the above test result, when the burst pressure value P2 of the shell 11 of the battery cell 10 is larger than or equal to 1.7 MPa, after the pressure relief mechanism 12 of the battery cell 10 bursts, the shell 11 can be in a relatively stable state, and when the burst pressure value P2 of the shell 11 of the battery cell 10 is smaller than 1.7 MPa, the shell 11 of the battery cell 10 tends to burst immediately following the pressure relief mechanism 12, and the battery cell 10 has poor structural stability and directional pressure relief stability.

In the present application, the burst pressure P2 of the shell 11 is designed to be 1.7 MPa or above, which can greatly improve compressive strength of the shell 11. Such design not only can effectively improve the stability of directional pressure relief of the battery cell 10 from the pressure relief mechanism 12, but also can reduce risks that the shell 11 bursts as the pressure relief mechanism 12 releases pressure, thereby effectively improving structural stability and safety of the battery cell 10.

According to some embodiments of the present application, P2/P1≥1.35.

Specifically, a ratio of P2 to P1 may be any value larger than or equal to 1.35, such as 1.35, 1.36, 1.38, 1.4, 1.5, 1.8, or 2.

In some embodiments, the ratio of P2 to P1 may be higher than 1.4. As an example, the ratio of P2 to P1 may be equal to 1.5.

If the ratio of P2 to P1 is too low (that is, P1 tends towards P2), after the pressure relief mechanism 12 acts in case of thermal runaway of the battery cell 10, the shell 11 tends to burst immediately following the pressure relief mechanism 12, thereby resulting in the battery failure. The ratio of P2 to P1 is designed to be 1.35 or above, so that there is a certain safety margin between pressure of the pressure relief mechanism 12 and pressure resistance value of the shell 11, thereby improving stability of the pressure relief mechanism 12 bursting prior to the shell 11, further reducing risks of bursting failure of the shell 11 following the pressure relief mechanism 12, and effectively improving the structural stability and safety of the battery cell 10.

According to some embodiments of the present application, P2-P1≥0.4 MPa.

Specifically, a difference value between P2 and P1 may be any value larger than or equal to 0.4 MPa, such as 0.4 MPa, 0.5 MPa, 0.6 MPa, 0.8 MPa, 1 MPa, or 2MPa. As an example, the difference value between P2 and P1 may be equal to 1.2 MPa.

If the difference value between P2 and P1 is too small (that is, P1 tends towards P2), after the pressure relief mechanism 12 acts in case of thermal runaway of the battery cell 10, the shell 11 tends to burst immediately following the pressure relief mechanism 12, thereby resulting in the battery failure. The difference value between P2 and P1 is designed to be 0.4 MPa or above, thereby further ensuring the safety margin between the pressure of the pressure relief mechanism 12 and the pressure resistance value of the shell 11, improving the stability of the pressure relief mechanism 12 bursting prior to the shell 11, further reducing the risks of bursting failure of the shell 11 following the pressure relief mechanism 12, and effectively improving the structural stability and safety of the battery cell 10.

In some embodiments, 0.5 MPa≤P1≤1.3 MPa.

Specifically, P1 may be any value between 0.5 MPa and 1.3 MPa. For example, P1 may be, e.g., 0.5 MPa, 0.6 MPa, 0.7 MPa, 0.8 MPa, 0.9 MPa, 1 MPa, 1.1 MPa, 1.2 MPa, or 1.3MPa.

In some embodiments, P1 may be any value between 0.7 MPa and 1.1 MPa. For example, P1 may be, e.g., 0.72 MPa, 0.75 MPa, 0.85 MPa, 0.92 MPa, or 1.08 MPa. As an example, P1 is 1.1 MPa.

If P1 is designed to be too low, it tends to cause the pressure relief mechanism 12 of the battery cell 10 to act prematurely, thus affecting the service life of the battery cell 10; and if P1 is designed to be too high, the shell 11 will be required to have a too high compressive strength, thus failing to satisfy the pressure relief requirements of the battery cell 10. P1 is designed to be between 0.5 MPa and 1.3 MPa, which can effectively satisfy the pressure relief requirements of the battery cell 10.

According to some embodiments of the present application, further referring to FIG. 3, the shell 11 comprises a case 111 and an end cover 112, and the case 111 has an opening.

The case 111 may be a hollow structure with an opening formed at one end, or the case 111 may be a hollow structure with openings formed at two opposite ends. The case 111 may be made of various materials, such as copper, iron, aluminum, steel, or aluminum alloy. The end cover 112 is a component that closes the opening of the case 111 to isolate the internal environment of the battery cell 10 from the external environment. The end cover 112 and the case 111 jointly define a sealed space for accommodating the electrode assembly, an electrolyte solution, and other components. The end cover 112 may be connected to the case 111 by welding or winded sealing, to close the opening of the case 111. The shape of the end cover 112 may match the shape of the shell 11. For example, the case 111 is a cuboid structure, and the end cover 112 is a rectangular platy structure matching the shell 11. For another example, the case 111 is a cylinder, and the end cover 112 is a round platy structure matching the case 111. The end cover 112 may also be made of various materials, such as copper, iron, aluminum, steel, or aluminum alloy.

In the battery cell 10, the number of end covers 112 may be one, or may be two. In an embodiment where the case 111 is a hollow structure with openings formed at both ends, two end covers 112 may be provided accordingly. The two end covers 112 close the two openings of the case 111 respectively. The two end covers 112 and the case 111 jointly define a sealed space. In an embodiment where the case 111 is a hollow structure with an opening at one end, one end cover 112 may be provided accordingly. The end cover 112 closes the opening at one end of the case 111. The end cover 112 and the case 111 jointly define a sealed space.

In some embodiments, as shown in FIG. 3, the first wall is the end cover 112, and the pressure relief mechanism 12 is provided on the end cover 112.

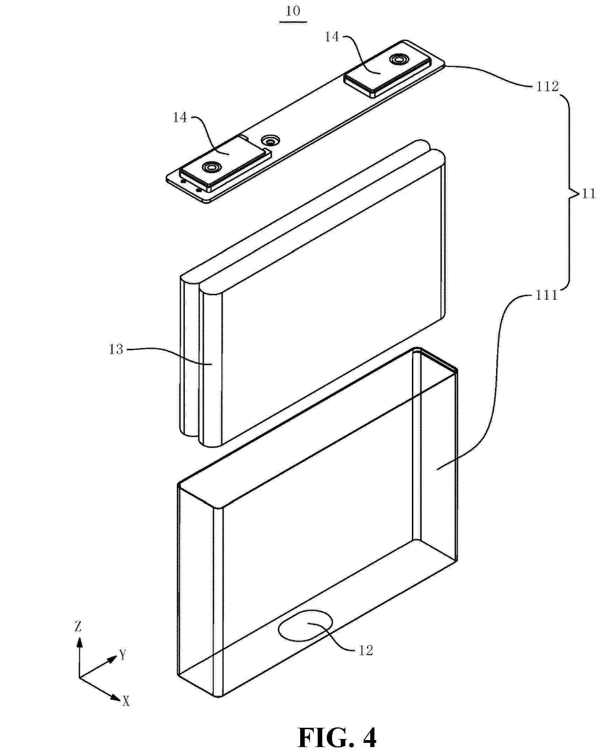

In still other embodiments, the first wall is any one wall portion of the shell 111. As shown in FIG. 4, FIG. 4 is an exploded perspective view of a battery cell provided in some other embodiments of the present application. The pressure relief mechanism 12 may be provided at the bottom of the case 111, the first wall is a bottom wall of the case 111, and the first wall is arranged opposite to the end cover 112.

In the above technical solutions, the pressure relief mechanism is provided on the bottom wall of the case 111. In case of thermal runaway of the battery cell, emissions from thermal runaway of the battery cell can be prevented from being sprayed directly towards the passenger compartment, thereby improving the use safety for users.

In some embodiments, as shown in FIG. 3, the battery cell 10 further comprises a terminal post 14, one end of the terminal post 14 is electrically connected to the electrode assembly 13 accommodated in the shell 11, and the terminal post 14 is configured to lead out electrical energy of the battery cell 10. Generally, two terminal posts 14 are provided, namely a positive electrode terminal post and a negative electrode terminal post. The positive electrode terminal post and the negative electrode terminal post may be arranged on a same side of the battery cell 10, or may be arranged on two opposite sides of the battery cell 10.

In some embodiments, the terminal post 14 may be mounted on the end cover 112, and of course, the terminal post 14 may also be mounted on the case 111.

The end cover 112 may be connected to the case 111 by welding or winded sealing.

It is understandable that the shell 11 comprises a case 111 and an end cover 112 connected to the case 111, and P2 refers to burst pressure value of the end cover 112 itself, the case 111 itself, and a connection between the end cover 112 and the case 111.

The burst pressure value of the non-pressure relief mechanism region of the shell 11 is designed to be above 1.7 MPa, which can effectively ensure the connection stability at the connection between the case 111 and the end cover 112 and the oerall pressure resistance stability of the shell 11 in case of occurrence of thermal runaway of the battery cell 10.

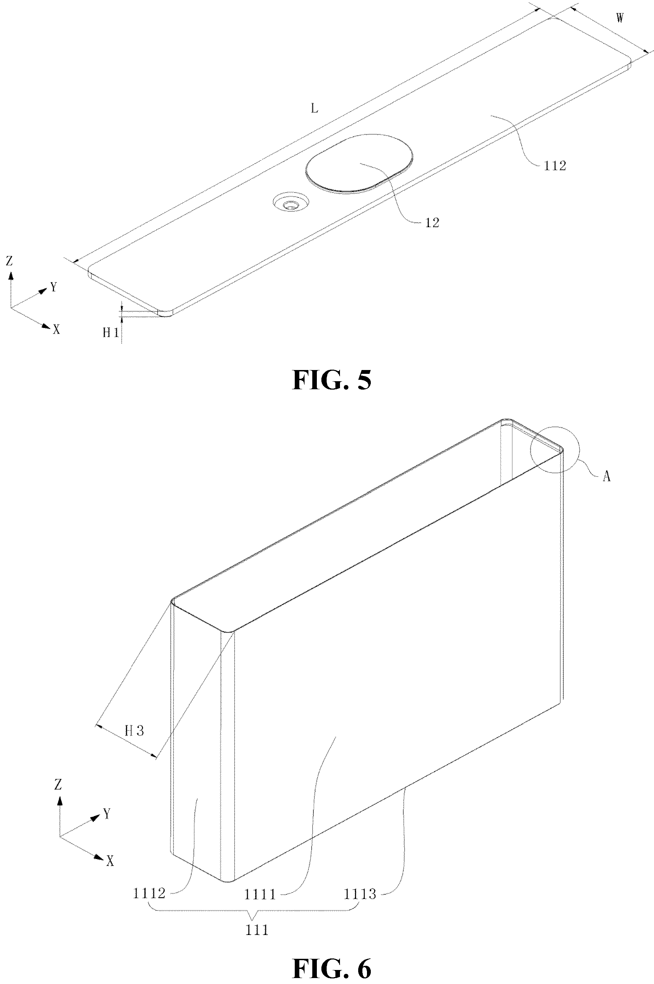

According to some embodiments of the present application, further referring to FIG. 3, and further referring to FIGS. 5 and 6, FIG. 5 is a schematic structural diagram of an end cover provided in some embodiments of the present application; and FIG. 6 is a schematic structural diagram of a case provided in some embodiments of the present application. The end cover 112 is a rectangular plate, and the end cover 112 has a width of W, satisfying W≤40 mm. Specifically, the width W of the end cover 112 may be any value smaller than or equal to 40 mm and larger than 0. For example, W may be, e.g., 40 mm, 38 mm, 30 mm, 25 mm, 10 mm, or 5 mm.

In some embodiments, the width W of the end cover 112 may be larger than or equal to 5 mm, and smaller than or equal to 40 mm.

In some embodiments, as shown in FIGS. 5 and 6, thickness H3 of the battery cell 10 (thickness direction of the battery cell 10 extends along a first direction X) may be any value smaller than or equal to 40 mm and larger than 0. For example, H3 may be, e.g., 40 mm, 38 mm, 30 mm, 25 mm, 10 mm, or 5 mm.

In order to test the influence of the width W of the end cover 112 on P2, the following test is carried out:
Test conditions: a plurality of battery cells 10 installed with the pressure relief mechanisms 12 with P1 of 1.1 MPa are taken, and thicknesses of cases 111 and end covers 112 of shells 11 of the plurality of battery cells 10 are each a constant value. The result is as shown in the table below.

**Table 2 Test result of influence of width W of end cover 112 on P2**

| P1 (MPa) | Gravimetric energy density/volumetric energy density | Case wall thickness H2 (mm) | End cover thickness H1 (mm) | End cover width W (mm) | P2 (MPa) | Only the weak portion of the pressure relief mechanism bursts in case of occurrence of thermal runaway |
|---|---|---|---|---|---|---|
| 1.1 | 240 Wh/kg | 0.6 | 2 | 5 | 2.7 | Yes |
| | 620 Wh/L | | | | | |
| 1.1 | 240 Wh/kg | 0.6 | 2 | 10 | 2.4 | Yes |
| | 620 Wh/L | | | | | |
| 1.1 | 240 Wh/kg | 0.6 | 2 | 30 | 2.3 | Yes |
| | 620 Wh/L | | | | | |
| 1.1 | 240 Wh/kg | 0.6 | 2 | 32 | 2.3 | Yes |
| | 620 Wh/L | | | | | |
| 1.1 | 240 Wh/kg | 0.6 | 2 | 34 | 2.3 | Yes |
| | 620 Wh/L | | | | | |
| 1.1 | 240 Wh/kg | 0.6 | 2 | 36 | 2.0 | Yes |
| | 620 Wh/L | | | | | |
| 1.1 | 240 Wh/kg | 0.6 | 2 | 38 | 1.9 | Yes |
| | 620 Wh/L | | | | | |
| 1.1 | 240 Wh/kg | 0.6 | 2 | 40 | 1.8 | Yes |
| | 620 Wh/L | | | | | |
| 1.1 | 240 Wh/kg | 0.6 | 2 | 42 | 1.6 | No |
| | 620 Wh/L | | | | | |
| 1.1 | 240 Wh/kg | 0.6 | 2 | 44 | 1.5 | No |
| | 620 Wh/L | | | | | |
| 1.1 | 240 Wh/kg | 0.6 | 2 | 46 | 1.4 | No |
| | 620 Wh/L | | | | | |
| 1.1 | 240 Wh/kg | 0.6 | 2 | 50 | 1.4 | No |
| | 620 Wh/L | | | | | |
| 1.1 | 240 Wh/kg | 0.6 | 2 | 60 | 1.4 | No |
| | 620 Wh/L | | | | | |
| 1.1 | 240 Wh/kg | 0.6 | 2 | 90 | 1.3 | No |
| | 620 Wh/L | | | | | |

As can be seen from the above test result, P2 decreases with the increase of the width W of the end cover 112. When the width W of the end cover 112 is larger than 40 mm, the structural stability of the shell 11 fails to satisfy requirements. The larger the width of the end cover 112 is, the poorer the deformation resistance of the end cover 112 is when the end cover 112 is subjected to a force due to occurrence of thermal runaway of the battery cell 10, and the easier the end cover 112 deforms because of being subjected to the force. The deformation of the end cover 112 can directly affect the connection stability of the end cover 112 and the case 111, thereby reducing the compressive strength at the connection between the end cover 112 and the case 111. The end cover 112 is designed to have a width of 40 mm or smaller, which can effectively ensure the deformation resistance of the end cover 112, thereby effectively improving the compressive strength at the connection between the case 111 and the end cover 112.

Moreover, in order to ensure the energy density and manufacturing feasibility of the battery cell 10, the width W of the end cover 112 may be larger than or equal to 5 mm.

In some embodiments, according to some embodiments of the present application, the end cover 112 is a rectangular plate, and the end cover 112 has a length of L, satisfying L≤1,200 mm.

Specifically, the length L of the end cover 112 may be any value smaller than or equal to 1,200 mm and larger than W. For example, L may be, e.g., 1,200 mm, 1,000 mm, 800 mm, 300 mm, 80 mm, or 50 mm.

In some embodiments, the length L of the end cover 112 may be larger than or equal to 100 mm and smaller than or equal to 1,200 mm.

The larger the length of the end cover 112 is, the poorer the deformation resistance of the end cover 112 is when the end cover 112 is subjected to a force due to occurrence of thermal runaway of the battery cell 10, and the easier the end cover 112 deforms because of being subjected to the force. The deformation of the end cover 112 will directly affect the connection stability of the end cover 112 and the case 111, thereby reducing the compressive strength at the connection between the end cover 112 and the case 111. The end cover 112 is designed to have a length of 1,200 mm or smaller, which can effectively ensure the deformation resistance of the end cover 112, thereby effectively improving the compressive strength at the connection between the case 111 and the end cover 112. Moreover, in order to ensure the energy density and manufacturing feasibility of the battery cell 10, the length L of the end cover 112 may be larger than or equal to 100 mm.

According to some embodiments of the present application, the end cover 112 has a thickness of H1, satisfying 1 mm≤H1≤5 mm.

Specifically, the thickness H1 of the end cover 112 may be any value larger than or equal to 1 mm and smaller than or equal to 5 mm. For example, H1 may be, e.g., 1 mm, 2 mm, 3 mm, 4 mm, or 4.5 mm.

It should be noted that the end cover 112 may be designed to have equal thickness or may be designed to have unequal thickness. When the end cover 112 is a structure with equal thickness, H1 refers to the wall thickness of the end cover 112, that is, the wall thickness of the end cover 112 may be any value larger than or equal to 1 mm and smaller than or equal to 5 mm. For example, the wall thickness of the end cover 112 may be, e.g., 1 mm, 2 mm, 3 mm, 4 mm, or 4.5 mm. When the end cover 112 is a structure with unequal thickness, it means that the smallest thickness of the end cover 112 may be larger than or equal to 1 mm, and the largest thickness of the end cover 112 may be smaller than or equal to 5 mm.

It should be noted in particular that the thickness of the end cover 112 here does not include thicknesses of various functional regions that may be provided on the end cover 112 (such as a liquid injection hole location, a terminal post installation location, and a pressure relief mechanism 12 installation location). That is, H1 refers to the thickness of the end cover 112 except for the functional regions.

In order to test the influence of the width of the end cover 112 on P2, the following test is carried out:

Test conditions: a plurality of battery cells 10 installed with the pressure relief mechanisms 12 with P1 of 1.1 MPa are taken, and thicknesses of cases 111 and widths of end covers 112 of shells 11 of the plurality of battery cells 10 are each a constant value. The result is as shown in the table below.

**Table 3 Test result of influence of thickness of end cover 112 on P2**

| P1 (MPa) | Case Wall thickness (mm) | End cover Width W (mm) | End cover Thickness H1 (mm) | P2 (MPa) | Only the weak portion of the pressure relief mechanism bursts in case of occurrence of thermal runaway | Gravimetric energy density/volumetric energy density |
|---|---|---|---|---|---|---|
| 1.1 | 0.6 | 40 | 0.5 | 0.7 | No | 240 Wh/kg |
| | | | | | | 620 Wh/L |
| 1.1 | 0.6 | 40 | 0.7 | 0.8 | No | 200 Wh/kg |
| | | | | | | 600 Wh/L |
| 1.1 | 0.6 | 40 | 0.9 | 0.9 | No | 240 Wh/kg |
| | | | | | | 620 Wh/L |
| 1.1 | 0.6 | 40 | 1 | 1.7 | Yes | 240 Wh/kg |
| | | | | | | 620 Wh/L |
| 1.1 | 0.6 | 40 | 1.2 | 1.7 | Yes | 240 Wh/kg |
| | | | | | | 620 Wh/L |
| 1.1 | 0.6 | 40 | 1.4 | 1.7 | Yes | 240 Wh/kg |
| | | | | | | 620 Wh/L |
| 1.1 | 0.6 | 40 | 1.9 | 1.7 | Yes | 240 Wh/kg |
| | | | | | | 620 Wh/L |
| 1.1 | 0.6 | 40 | 2.5 | 1.8 | Yes | 240 Wh/kg |
| | | | | | | 620 Wh/L |
| 1.1 | 0.6 | 40 | 4 | 1.8 | Yes | 240 Wh/kg |
| | | | | | | 620 Wh/L |
| 1.1 | 0.6 | 40 | 5 | 1.8 | Yes | 240 Wh/kg |
| | | | | | | 620 Wh/L |
| 1.1 | 0.6 | 40 | 5.5 | 1.8 | Yes | 210 Wh/kg |
| | | | | | | 610 Wh/L |
| 1.1 | 0.6 | 40 | 6 | 1.8 | Yes | 200 Wh/kg |
| | | | | | | 600 Wh/L |

As can be seen from the above test result, when the thickness of the end cover 112 is smaller than 1 mm, the structural stability of the shell fails to satisfy requirements. When the thickness of the end cover 112 is larger than 5 mm, the energy density of the battery cell 10 is reduced. A smallest thickness of the end cover 112 is larger than or equal to 1 mm, which can effectively improve the deformation resistance of the end cover 112 itself, thereby effectively improving the compressive strength at the connection between the end cover 112 and the case 111. A largest thickness of the end cover 112 is smaller than or equal to 5 mm, which not only can ensure the deformation resistance of the end cover 112 itself, but also can reduce the space occupancy of the end cover 112, and is beneficial to improving the energy density of the battery cell 10 and reducing the overall weight of the battery cell 10.

According to some embodiments of the present application, the end cover 112 is a thickest wall of the shell 11.

Specifically, the smallest thickness of the end cover 112 is larger than the thickness of each wall of the case 111.

During the battery cell 10 assembly, the end cover 112 needs to be connected to the case 111 by, e.g., welding. Moreover, the end cover 112 is usually installed with a component such as a terminal post, and increase of the thickness of the end cover 112 can effectively ensure the structural strength of the end cover 112, thereby reducing the risks of deformation of the end cover 112 because of being subjected to the force.

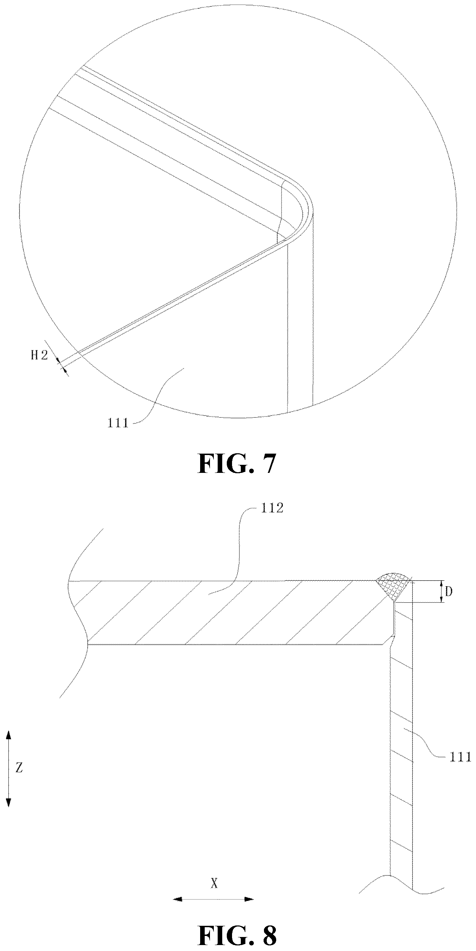

According to some embodiments of the present application, further referring to FIG. 6, and further referring to FIG. 7, FIG. 7 is a partial enlarged view of part A shown in FIG. 6. The case 111 has a wall thickness of H2, satisfying 0.2 mm<H2≤3 mm.

Specifically, the thickness H2 of any one wall portion of the case 111 may be any value larger than 0.2 mm and smaller than or equal to 3 mm. For example, H2 may be, e.g., 0.3 mm, 0.5 mm, 0.8 mm, 1 mm, 2 mm, or 3 mm.

It should be noted that each wall portion of the case 111 may be designed to have equal thickness, or may be designed to have unequal thickness. When each wall portion of the case 111 is a structure with equal thickness, thickness of a thinnest wall portion of the case 111 is larger than 0.2 mm, and thickness of a thickest wall portion of the case 111 should be smaller than or equal to 3 mm.

When each wall portion of the case 111 is a structure with unequal thickness, the thickness at a position with a smallest thickness among all wall portions of the case 111 may be larger than 0.2 mm, and the thickness at a portion with a largest thickness among all wall portions of the case 111 may be smaller than or equal to 3 mm.

It should be noted in particular that the thickness of each wall portion of the case 111 herein does not include thicknesses of various functional regions that may be provided on the case 111 (such as a liquid injection hole location, a terminal post installation location, a pressure relief mechanism 12 installation location, a step at the case opening accommodating the end cover, and a case corner), that is, H1 refers to the thickness of the case 111 except for the functional regions.

Moreover, it is understandable that the thickness of each wall portion of the case 111 may be equal, or may be different.

In order to test the influence of the thickness of the case 111 on P2, the following test is carried out:

Test conditions: a plurality of battery cells 10 installed with the pressure relief mechanisms 12 with P1 of 1.1 MPa are taken, and thicknesses of end covers 112 and widths of end covers 112 of shells 11 of the plurality of battery cells 10 are each a constant value. The result is as shown in the table below:

**Table 4 Test result of influence of thickness of case 111 on P2**

| P1 (MPa) | End cover thickness (mm) | End cover width W (mm) | Case Wall thickness H2 (mm) | P2 (MPa) | Only the weak portion of the pressure relief mechanism bursts in case of occurrence of thermal runaway | Gravimetric energy density/volumetric energy density |
|---|---|---|---|---|---|---|
| 1.1 | 2.0 | 40 | 0.1 | 1.0 | No | 240 Wh/kg |
| | | | | | | 620 Wh/L |
| 1.1 | 2.0 | 40 | 0.2 | 1.1 | No | 200 Wh/kg |
| | | | | | | 600 Wh/L |
| 1.1 | 2.0 | 40 | 0.5 | 1.7 | Yes | 240 Wh/kg |
| | | | | | | 620 Wh/L |
| 1.1 | 2.0 | 40 | 0.7 | 2.0 | Yes | 240 Wh/kg |
| | | | | | | 620 Wh/L |
| 1.1 | 2.0 | 40 | 1.0 | 2.2 | Yes | 240 Wh/kg |
| | | | | | | 620 Wh/L |
| 1.1 | 2.0 | 40 | 1.2 | 2.3 | Yes | 240 Wh/kg |
| | | | | | | 620 Wh/L |
| 1.1 | 2.0 | 40 | 2.0 | 1.8 | Yes | 240 Wh/kg |
| | | | | | | 620 Wh/L |
| 1.1 | 2.0 | 40 | 3.0 | 1.8 | Yes | 240 Wh/kg |
| | | | | | | 620 Wh/L |
| 1.1 | 2.0 | 40 | 4.0 | 1.8 | Yes | 200 Wh/kg |
| | | | | | | 594 Wh/L |
| 1.1 | 2.0 | 40 | 5.0 | 1.8 | Yes | 190 Wh/kg |
| | | | | | | 586 Wh/L |

As can be seen from the above test result, when the smallest thickness of the case 111 is smaller than 0.2 mm, the structural stability of the shell fails to satisfy requirements. When the thickness of the case 111 is larger than 3 mm, the energy density of the battery cell 10 is reduced. A smallest thickness of each wall portion of the case 111 is larger than 0.2 mm, which can effectively improve the deformation resistance of the case 111, thereby effectively improving the compressive strength at the connection between the end cover 112 and the case 111 and the overall compressive strength of the case 111. The thickness of the case 111 is smaller than or equal to 3 mm, which not only can ensure the deformation resistance of the case 111, but also can reduce the space occupancy of the case 111, and is beneficial to improving the energy density of the battery cell 10 and reducing the overall weight of the battery cell 10.

According to some embodiments of the present application, the first wall is the end cover 112.

The pressure relief mechanism 12 may be provided on the end cover 112, to facilitate the production and assembly of the battery cell 10. In case of thermal runaway of the battery cell 10, gases in the shell 11 flow toward the pressure relief mechanism 12, and the end cover 112 and the connection between the end cover 112 and the case 111 bear high pressure. The shell 11 is designed to have an overall burst pressure value of 1.7 MPa or above, which can effectively ensure the compressive strength at the connection between the end cover 112 and the case 111, thereby effectively improving the structural stability and safety of the shell 11.

According to some embodiments of the present application, referring to FIG. 3 again and further referring to FIG. 8, FIG. 8 is a partial sectional view of weld between an end cover and a case. The end cover 112 is welded to the case 111, and an effective fusion depth at the welding point between the end cover 112 and the case 111 is D, satisfying D≥200 µm.

The fusion depth refers to a distance between a deepest position of a fusion portion of a base material and a surface of the base material, and is a depth of fusion of weld of the base material. In this embodiment, the effective fusion depth refers to a distance between the upper surface of the end cover 112 and a deepest position of the fusion portion of the weld between the end cover 112 and the case 111.

D may be a value larger than or equal to 200 µm, such as 200 µm, 300 µm, 400 µm, or 500 µm.

The end cover 112 is welded to the case 111, which can effectively ensure the connection stability of the end cover 112 and the case 111, thereby effectively improving the compressive strength at the connection between the end cover 112 and the case 111; and the effective fusion depth at the connection between the end cover 112 and the case 111 is larger than or equal to 200 µm, which can further improve the compressive strength at the connection between the end cover 112 and the case 111.

According to some embodiments of the present application, D≤2,000 µm.

Specifically, D may be any value larger than or equal to 200 µm and smaller than or equal to 2,000 µm.For example, D may be, e.g., 200 µm, 500 µm, 800 µm, 1,000 µm, 1,500 µm, or 2,000 µm.

The effective fusion depth of the end cover 112 is designed to be below 2,000 µm, which can avoid the problem of increasing the thickness of the end cover 112 due to requirements for a too large effective fusion depth, thereby preventing the end cover 112 from being too thick, which impacts the energy density of the battery cell 10.

According to some embodiments of the present application, the battery cell 10 has a volumetric energy density of T1, satisfying T1≥600 Wh/L.

The volumetric energy density refers to a magnitude of energy stored in a certain volume of matter. T1 may be, e.g., 600 Wh/L, 610 Wh/L, 620 Wh/L, 630 Wh/L, or 640 Wh/L.

The burst pressure P2 of the shell 11 is designed to be higher than or equal to 1.7 MPa, and can be applied to a high energy density battery cell 10 with a volumetric energy density of higher than or equal to 600 Wh/L. The shell 11 with the burst pressure P2 of higher than or equal to 1.7 MPa can effectively reduce the risks that high-temperature and high-pressure gases break through the non-pressure relief mechanism 12 region of the shell 11 due to a large amount of energy released in case of thermal runaway of the high energy density battery cell 10.

According to some embodiments of the present application, T1≤1,200 Wh/L.

The shell 11 with the burst pressure of higher than or equal to 1.7 MPa is applied to a battery cell 10 with a volumetric energy density of lower than or equal to 1,200 Wh/L, thereby further effectively improving the structural stability of the battery cell 10.

According to some embodiments of the present application, the battery has a gravimetric energy density of T2, satisfying T2≥220 Wh/Kg.

The gravimetric energy density refers to a magnitude of energy stored in a certain mass of matter. T2 may be, e.g., 220 Wh/Kg, 230 Wh/Kg, 240 Wh/Kg, or 250 Wh/Kg.

The burst pressure P2 of the shell 11 is designed to be higher than or equal to 1.7 MPa, and can be applied to a high energy density battery cell 10 with a gravimetric energy density of higher than or equal to 220 Wh/Kg. The shell 11 with the burst pressure P2 of higher than or equal to 1.7 MPa can effectively reduce the risks that high-temperature and high-pressure gases break through the non-pressure relief mechanism 12 region of the shell 11 due to a large amount of energy released in case of thermal runaway of the high energy density battery cell 10.

According to some embodiments of the present application, T2≤500 Wh/Kg.

The shell 11 with the burst pressure of higher than or equal to 1.7 MPa is applied to a battery cell 10 with a volumetric energy density of lower than or equal to 500 Wh/Kg, thereby further effectively improving the structural stability of the battery cell 10.

According to some embodiments of the present application, the shell 11 is a metal member.

As mentioned above, the shell 11 may be made of a metal material, such as aluminum, aluminum alloy, or steel.

The shell 11 is a metal member. Compared with a shell 11 made of plastic or other materials, the shell 11 made of a metal material has strong structural rigidity, outstanding deformation resistance, and good high temperature resistance, and can further improve the structural stability of the battery cell 10.

Some embodiments of the present application provide a battery, comprising a box body and the battery cell 10 of any one of the above solutions, wherein the battery cell 10 is accommodated in the box body.

Some embodiments of the present application provide an electrical apparatus, comprising the battery cell 10 of any one of the above solutions, wherein the battery cell 10 is configured to provide electrical energy.

The electrical apparatus may be any one of the above devices or systems using batteries.

Referring to FIGS. 3-8, some embodiments of the present application provide a battery cell 10. The battery cell 10 comprises a shell 11 and a pressure relief mechanism 12. The shell 11 is a metal member. The shell 11 comprises a case 111 and an end cover 112, the case 111 has an opening, the end cover 112 closes the opening, and the case 111 is welded to the end cover 112. The pressure relief mechanism 12 is provided on the end cover 112; wherein the burst pressure of the pressure relief mechanism 12 is P1, and the burst pressure at the connection between the case 111 and the end cover 112 is P2, satisfying P2>P1, P2≥1.7 MPa, P2-P1≥0.4 MPa, 5 mm≤W≤40 mm, 100 mm≤L≤1,200 mm, 1 mm≤H1≤5 mm, 0.2 mm<H2≤3 mm, 200 µm≤D≤2,000 µm, T1≥600 Wh/L, and T2≥220 Wh/Kg.

W is the width of the end cover 112, L is the length of the end cover 112, H1 is the thickness of the end cover 112, and H2 is the wall thickness of the case 111. In this embodiment, the shell 11 is a hexahedral structure, and the case 111 comprises two first side walls 1111 arranged oppositely along a first direction X, two second side walls 1112 arranged oppositely along a second direction Y, and a bottom wall 1113 arranged opposite to the end cover along a third direction Z, wherein the first direction X, the second direction Y, and the third direction Z are perpendicular pairwise, and the two first side walls 1111 are wall portions with largest areas of the shell. The first side wall 1111, the second side wall 1112, and the bottom wall 1113 are all designed with equal thickness, and the first side wall 1111, the second side wall 1112, and the bottom wall 1113 have different thicknesses. D is the fusion depth of the welding point between the end cover 112 and the case 111, T1 is the volumetric energy density of the battery cell 10, and T2 is the gravimetric energy density of the battery cell 10.

**Table 5 Test result of P2 of battery cells 10 of different sizes in this embodiment**

| End cover width W (mm) | Case wall thickness (mm) | End cover thickness H1 (mm) | P1 (MPa) | P2 (MPa) | Only the weak portion of the pressure relief mechanism bursts in case of occurrence of thermal runaway |
|---|---|---|---|---|---|
| | First side wall/second side wall/bottom wall | | | | |
| 31 | 0.6/0.5/1.2 | 2.0 | 1.1 | 2.3 | Yes |
| 26 | 0.6/0.5/1.2 | 2.5 | 1.1 | 2.0 | Yes |
| 40 | 0.6/0.5/1.2 | 2.0 | 1.1 | 1.7 | Yes |
| 44 | 0.6/0.5/1.5 | 2.0 | 1.1 | 1.4 | No |
| 88 | 0.8/0.6/1.8 | 3.0 | 1.1 | 1.4 | No |

It should be noted that the features in the embodiments the present application may be combined with each other in case of no conflict.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery cell, comprising:
a shell comprising a first wall; and
a pressure relief mechanism provided on the first wall;
wherein the burst pressure of the pressure relief mechanism is P1, and the burst pressure of the shell is P2, satisfying P2≥1.7 MPa and P2>P1.

2. The battery cell according to claim 1, wherein P2/P1≥1.35.

3. The battery cell according to claim 1 or 2, wherein P2-P1≥0.4 MPa.

4. The battery cell according to any one of claims 1-3, wherein 0.5 MPa≤P1≤1.3 MPa.

5. The battery cell according to any one of claims 1-4, wherein the shell comprises a case and an end cover, the case has an opening, and the end cover closes the opening.

6. The battery cell according to claim 5, wherein the end cover is a rectangular plate, and has a width of W, satisfying W≤40 mm.

7. The battery cell according to claim 5 or 6, wherein the end cover is a rectangular plate, and has a length of L, satisfying L≤1,200 mm.

8. The battery cell according to any one of claims 5-7, wherein the end cover has a thickness of H1, satisfying 1 mm≤H1≤5 mm.

9. The battery cell according to any one of claims 5-8, wherein the end cover is a thickest wall of the shell.

10. The battery cell according to claim 9, wherein the case has a wall thickness of H2, satisfying 0.2 mm<H2≤3 mm.

11. The battery cell according to any one of claims 5-10, wherein the first wall is the end cover.

12. The battery cell according to any one of claims 5-11, wherein the end cover is welded to the case, and an effective fusion depth at the welding point between the end cover and the case is D, satisfying D≥200 µm.

13. The battery cell according to claim 12, wherein D≤2,000 µm.

14. The battery cell according to any one of claims 1-13, wherein the battery cell has a volumetric energy density of T1, satisfying T1≥600 Wh/L.

15. The battery cell according to claim 14, wherein T1≤1,200 Wh/L.

16. The battery cell according to any one of claims 1-15, wherein the battery has a gravimetric energy density of T2, satisfying T2≥220 Wh/Kg.

17. The battery cell according to claim 16, wherein T2≤500 Wh/Kg.

18. The battery cell according to any one of claims 1-17, wherein the shell is a metal member.

19. A battery, comprising a box body and the battery cell according to any one of claims 1-18, the battery cell being accommodated in the box body.

20. An electrical apparatus, comprising the battery cell according to any one of claims 1-18, the battery cell being configured to provide electrical energy.
